(19) Europäisches Patentamt / European Patent Office / Office européen des brevets

(11) **EP 2 091 878 B1**

(12) **FASCICULE DE BREVET EUROPEEN**

(45) Date de publication et mention de la délivrance du brevet:
**23.12.2015 Bulletin 2015/52**

(21) Numéro de dépôt: **07866485.1**

(22) Date de dépôt: **25.10.2007**

(51) Int Cl.:
*C03C 3/078* (2006.01)  *C03C 4/20* (2006.01)
*C08K 7/14* (2006.01)  *C03C 13/00* (2006.01)

(86) Numéro de dépôt international:
**PCT/FR2007/052241**

(87) Numéro de publication internationale:
**WO 2008/050069 (02.05.2008 Gazette 2008/18)**

(54) **COMPOSITION DE VERRE RESISTANT AUX MILIEUX CHIMIQUES POUR LA FABRICATION DE FILS DE VERRE DE RENFORCEMENT**

GEGENÜBER CHEMISCHEN MEDIEN RESISTENTE GLASZUSAMMENSETZUNG FÜR DIE HERSTELLUNG VON GLASVERSTÄRKUNGSGARNEN

GLASS COMPOSITION RESISTANT TO CHEMICAL MEDIA FOR THE MANUFACTURE OF GLASS REINFORCING YARNS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **25.10.2006 FR 0654503**

(43) Date de publication de la demande:
**26.08.2009 Bulletin 2009/35**

(73) Titulaire: **OCV Intellectual Capital, LLC Toledo, OH 43659 (US)**

(72) Inventeurs:
• **BERTHEREAU, Anne**
  **73190 Challes Les Eaux (FR)**
• **LALANDE, Jérôme**
  **94500 Champigny sur Marne (FR)**

(74) Mandataire: **Nevant, Marc et al**
  **Cabinet Beau de Loménie**
  **158, rue de l'Université**
  **75340 Paris Cedex 07 (FR)**

(56) Documents cités:
WO-A-01/90017  DE-A1- 2 656 002
FR-A1- 2 651 223  FR-A1- 2 837 818
US-A- 3 861 926  US-B1- 6 627 569

**Description**

L'invention concerne une composition de verre résistant aux milieux chimiques, en particulier présentant une résistance hydrolytique élevée, pour la réalisation de fils de verre de renforcement, et les produits organiques et inorganiques (ou composites) renfermant de tels fils.

Il est connu depuis longtemps d'utiliser des fils de verre pour renforcer des matières organiques et inorganiques afin de leur conférer de meilleures propriétés mécaniques. Le plus souvent, les fils sont constitués d'un verre de composition $SiO_2$-$Al_2O_3$-$CaO$-$B_2O_3$ (verre E) qui présente une excellente résistance hydrolytique et thermique. Ce type de verre n'est cependant pas adapté aux milieux alcalins et acides.

Un moyen permettant d'améliorer la résistance aux alcalis consiste à incorporer de l'oxyde de zirconium $ZrO_2$ dans la composition de verre. Par exemple, il est connu d'utiliser des verres à teneur élevée en $ZrO_2$ pour renforcer des ciments dont le caractère basique est très prononcé (pH pouvant aller jusqu'à 12,5).

De nombreux brevets divulguent des compositions de verre à forte teneur en $ZrO_2$.

EP 0500325 A1 décrit des compositions pour fibres de verre résistant aux milieux chimiques utilisables comme renforts du ciment ou de matières plastiques. Les compositions comprennent, en pourcentage en mole, 5 à 18 % de $TiO_2$, une teneur en $TiO_2$ et $ZrO_2$ comprise entre 12 et 25 %, 4 à 15 % de $BaO$ et une teneur en $MgO$, $CaO$, $SrO$, $BaO$ et $ZnO$ comprise entre 12 et 35 %.

JP 9156957 décrit une fibre de verre résistant aux alcalis, aux acides et à l'eau qui comprend 5 à 9 % en mole de $TiO_2$ et possède une teneur en $TiO_2$ et $ZrO_2$ comprise entre 13 et 17 % en mole.

US 5064785 B divulgue une composition de verre alcali-résistant pour fibres de verre qui contient 10 à 17 % en poids de $Na_2O$ et 0,5 à 7 % en poids de $TiO_2$. JP 2000-186787 A décrit un conduit (ou tube) en résine renforcé par une fibre de verre résistant aux alcalis et aux acides qui renferme 10 à 17 % en poids de $Na_2O$. FR 2 651 223 décrit des compositions comprenant (en poids) 54 à 65 % de $SiO_2$, 18 à 25 % de $ZrO_2$, 10 à 17 % de $Na_2O$, 0,5 à 8 % de $K_2O$ et 0 à 10 % de RO ou R représente Mg, Ca, Sr, Ba ou Zn, 0,5 à 7 % de $TiO_2$, 0 à 2 % d'$Al_2O_3$, avec une absence totale ou pratiquement totale de F. US 3 861 926 décrit des compositions comprenant (en poids) 62 à 75 % de $SiO_2$, 7 à 11 % de $ZrO_2$, 13 à 21 % d'oxyde de métal alcalin, 1 à 10 % d'oxyde de métal alcalino-terreux, et éventuellement de quantités réduites d'$Al_2O_3$, $B_2O_3$, $Fe_2O_3$, $CaF_2$ or $TiO_2$. DE 2 656 002 décrit des compositions comprenant (en poids) 40 à 75 % de $SiO_2$, 0,1 à 10 % de $CaO$, 0 à 8 % de $MgO$, 3 à 15 % de $Na_2O$, 5 à 20% de $ZrO_2$, 0 à 10 % d'$Al_2O_3$, au maximum 1,5 % de $Fe_2O_3$, au maximum 2 % de $TiO_2$, et au maximum 0,3 % de $P_2O_5$.

WO 2004/035497 A1 décrit des fibres constituées d'une composition de verre comprenant, en pourcentage en mole, 50 à 60 % de $SiO_2$, 0,5 à 20 % de $TiO_2$, 20 à 45 % de $MgO$, $CaO$, $SrO$ et $BaO$, 0 à 2 % de $Li_2O$, $Na_2O$ et $K_2O$, et présentant un rapport molaire $BaO/CaO$ compris entre 0,3 et 16. US 6627569 B et US 6630420 B divulguent des compositions de verre renfermant, en pourcentage en poids, 0,5 à 7 % d'$Al_2O_3$, moins de 10 % de $Na_2O$ et de $K_2O$ et plus de 0,1 % de $TiO_2$ ou plus de 0,6 % de $La_2O_3$.

CN 1046147 A décrit une fibre de verre alcali-résistant comprenant 11 à 14 % en poids de $ZrO_2$ et 1 à 5,5 % en poids de $TiO_2$. CN 1149031 A décrit une fibre de verre alcali-résistant qui renferme 0,1 à 10 % en poids de $TiO_2$ et 0,1 à 5 % en poids de $CaF_2$.

US 4014705 B divulgue des fibres continues de verre résistant aux alcalis qui contiennent 3 à 9 % en mole de $F_2$.

Outre leur résistance aux alcalis, les verres à teneur élevée en $ZrO_2$ présentent en général une bonne résistance aux acides.

Des fils constitués d'un verre ayant une forte proportion en $ZrO_2$ pouvant être utilisés pour renforcer du ciment sont vendus sous la marque Cem-FIL®. Ils peuvent également servir de renfort de matrices polymères, en particulier polyester et vinylester, dans des composites destinés à être en contact avec des milieux acides (WO 2006/090030 A1).

Un inconvénient des fils de verre précités est leur sensibilité à l'hydrolyse : la demanderesse a en effet constaté que les matériaux et les composites renforcés par ces fils perdent leur tenue mécanique dans des conditions de vieillissement en milieu humide, en particulier aux températures élevées. Dans le cas des composites à matrice polymère, les fils de verre n'adhèrent plus correctement à la matrice, ce qui se traduit par un blanchiment du composite. Sans vouloir être lié par une quelconque théorie, il semble que le blanchiment soit dû à un échange entre les ions $Na^+$ présents à la surface du verre et les protons contenus dans le milieu aqueux, qui provoque une dégradation de la structure superficielle du verre, et subsidiairement une augmentation locale de la proportion d'ions $OH^-$ qui favorise la rupture des liaisons chimiques entre le verre et la matrice. L'importance du blanchiment est directement liée à la quantité de $Na_2O$ dans la composition de verre.

La présente invention a pour but de proposer une composition de verre résistant aux milieux chimiques, qui présente notamment une résistance hydrolytique améliorée, tout en conservant une bonne résistance aux acides et aux alcalis, et qui peut être mise en oeuvre dans les conditions usuelles des installations de fibrage existantes.

Ce but est atteint grâce à la composition de verre résistant aux milieux chimiques pour la réalisation de fils, cette composition selon l'invention étant définie à la revendication 1 et comprenant les constituants suivants dans les limites définies ci-après, exprimés en pourcentages molaires :

| | |
|---|---|
| SiO$_2$ | 67 - 72 % |
| ZrO$_2$ | 5 - 9,5 % |
| R$_2$O (R = Na, K et Li) | 11 - 17 %, le taux de R$_2$O étant la somme des taux en Na$_2$O, K$_2$O et Li$_2$O |
| Li$_2$O | 0 - 5,5 % |
| K$_2$O | 2,5 - 5,5 % |
| Na$_2$O | <10% |
| CaO | 3 - 9 % |

la composition contenant en outre moins de 1 % d'impuretés (Al$_2$O$_3$, Fe$_2$O$_3$, Cr$_2$O$_3$, TiO$_2$, MgO, SrO, BaO et P$_2$O$_5$) et étant exempte de F, et satisfaisant la relation suivante :

$$2,5 \% < Na_2O + K_2O - CaO < 9,5 \%$$

ce qui permet de garantir que le fibrage s'effectue dans des conditions satisfaisantes, c'est-à-dire que la différence entre la température de formage des fils (T$_{Log\ \eta=3}$) et la température au liquidus (T$_{liq}$) est au moins égale à + 10°C. De préférence, la différence est au moins égale à +30°C et avantageusement au moins égale à +60°C.

En outre, la température de formage est au plus égale à 1320°C, de préférence est inférieure ou égale à 1300°C, correspondant à une température tout à fait acceptable car ne nécessitant pas de chauffer le verre de manière trop intense et permettant de réduire au minimum l'usure de la filière.

La composition de verre préférée selon l'invention comprend les constituants suivants (en pourcentage molaire) :

| | |
|---|---|
| SiO$_2$ | 67 - 72 % |
| ZrO$_2$ | 5 - 9,5 %, de préférence $\geq$ 7,5 % |
| R$_2$O (R = Na, K et Li) | 11 - 17 % |
| Li$_2$O | 0 - 5,5 % |
| K$_2$O | 2,5 - 5,5 % |
| Na$_2$O | 5 - < 10 % |
| CaO | 3 - 9 % |

la composition contenant en outre moins de 1% d'impuretés (Al$_2$O$_3$, Fe$_2$O$_3$, Cr$_2$O$_3$ et P$_2$O$_5$) et étant en exempte de F, TiO$_2$, MgO, SrO et BaO.

La composition de verre particulièrement préférée selon l'invention comprend les constituants suivants (en pourcentage molaire) :

| | |
|---|---|
| SiO$_2$ | 67 - 72 % |
| ZrO$_2$ | 5 - 9,5 %, de préférence $\geq$ 7,5 % |
| R$_2$O (R = Na, K et Li) | 11 - 17 % |
| Li$_2$O | 1,5 - 5,5 % |
| K$_2$O | 2,5 - 5,5 % |
| Na$_2$O | 5 - < 10 % |
| CaO | 3 - 9 % |

la composition contenant en outre moins de 1% d'impuretés (Al$_2$O$_3$, Fe$_2$O$_3$, Cr$_2$O$_3$ et P$_2$O$_5$) et étant en exempte de F, TiO$_2$, MgO, SrO et BaO.

Selon une autre caractéristique de l'invention, le taux de CaO dans la composition de verre varie de 3 à 8,5 %.

SiO$_2$ est l'oxyde qui forme le réseau des verres selon l'invention et joue un rôle essentiel pour leur stabilité. Dans le cadre de l'invention, lorsque le taux de SiO$_2$ est inférieur à 67 %, la viscosité du verre devient trop faible et les risques de dévitrification du verre lors du fibrage sont augmentés. En général, le taux de SiO$_2$ est maintenu inférieur ou égal à 72 %, car au-delà de cette valeur le verre devient très visqueux et difficile à fondre. De préférence, le taux de SiO$_2$ varie de 68 à 71,5 %. En outre, SiO$_2$ contribue à l'amélioration de la résistance en milieu neutre ou acide.

ZrO$_2$ est essentiel pour conférer au verre la résistance aux alcalis et son taux est par conséquent au moins égal à environ 5 %, de préférence supérieur ou égal à 7,5 %. En outre, ZrO$_2$ contribue à l'amélioration de la résistance aux acides. Un taux de $ZrO_2$ supérieur à 9,5 % augmente le risque de dévitrification lors du fibrage, et dégrade la fusibilité.

$Na_2O$, $K_2O$ et $Li_2O$ sont utilisés en tant que fondants pour abaisser la viscosité du verre et permettre une meilleure solubilisation du $ZrO_2$ lors de la fusion du mélange vitrifiable.

$Na_2O$ a un effet néfaste sur la résistance hydrolytique du verre et par conséquent son taux est limité à une valeur inférieure à 10 %, de préférence supérieure ou égale à 5 %, également pour maintenir des conditions de fusion et de fibrage satisfaisantes.

Les taux de $Li_2O$ et de $K_2O$ sont de préférence inférieurs ou égaux à 5,5 % afin de conserver une température au liquidus acceptable et de réduire au minimum le prix du verre (les matières premières à base de $Li_2O$ et de $K_2O$ sont généralement des carbonates dont le coût est élevé).

Le taux de $K_2O$ est supérieur ou égal à 2,5 %.

Préférentiellement, la composition de verre renferme du $Li_2O$ et du $K_2O$, ce qui permet de réduire la lixiviation des alcalins (Na, K et/ou Li) lorsque le verre est en contact avec un milieu aqueux. Un niveau de lixiviation avantageux est obtenu quand le taux de $Li_2O$ est supérieur ou égal à 1,5 %, de préférence de l'ordre de 2 %.

Selon une caractéristique avantageuse de l'invention, les rapports molaires $Li_2O/R_2O$ et $K_2O/R_2O$ sont inférieurs ou égaux à 0,5. De préférence, $Li_2O/R_2O$ est inférieur ou égal à 0,35 et $K_2O/R_2O$ est inférieur ou égal à 0,30.

Conformément à l'invention, le taux de $R_2O$, c'est-à-dire la somme des taux en $Na_2O$, $K_2O$ et $Li_2O$, est supérieur ou égal à 11 % et est inférieur ou égal à 17 % afin d'avoir des conditions de fusion et de fibrage satisfaisantes.

CaO permet d'ajuster la viscosité du verre et de contrôler la dévitrification. Le taux de CaO varie de 3 à 9 % afin de conserver une température au liquidus acceptable, en règle générale inférieure à 1280°C, de préférence inférieure à 1260°C, et avantageusement inférieure ou égale à 1220°C. De préférence le taux de CaO est inférieur ou égal à 8,5 %. CaO contribue à l'amélioration de la résistance hydrolytique des verres selon l'invention.

La composition de verre selon l'invention peut contenir jusqu'à 1 % d'impuretés inévitables apportées par les matières premières servant à l'élaboration du verre et/ou provenant des réfractaires du four. Les impuretés sont constituées d'$Al_2O_3$, d'oxydes de fer (exprimés sous la forme de $Fe_2O_3$), de $Cr_2O_3$, de $TiO_2$, de MgO, de SrO, de BaO et de $P_2O_5$. Le taux d'$Al_2O_3$ est généralement inférieur à 0,5 %. De préférence, le taux de $Fe_2O_3$ n'excède pas 0,5 % pour ne pas nuire de façon rédhibitoire à la couleur des fils de verre et à la conduite de l'installation de fibrage, en particulier aux transferts de chaleur dans le four. De préférence encore, le taux de $Cr_2O_3$ est inférieur à 0,05 %, et mieux encore est nul. Avantageusement, le taux de chaque oxyde $TiO_2$, MgO, SrO et BaO est inférieur à 0,5 %.

En règle générale, la composition de verre est dépourvue de $TiO_2$, MgO, SrO et BaO.

La composition de verre est exempte de F. La présence de fluor est proscrite à cause des risques d'émissions polluantes et de réaction exothermique avec $Li_2O$ pouvant survenir pendant la fusion, et des problèmes de corrosion des éléments réfractaires du four.

A partir de la composition de verre précédemment décrite, les fils de verre sont obtenus selon le procédé de fibrage suivant : on étire une multiplicité de filets de verre fondu, s'écoulant d'une multiplicité d'orifices disposés à la base d'une ou plusieurs filières, sous la forme d'une ou plusieurs nappes de fils continus, puis on rassemble les filaments en un ou plusieurs fils que l'on collecte sur un support en mouvement. Il peut s'agir d'un support en rotation lorsque les fils sont collectés sous la forme d'enroulements ou d'un support en translation lorsque les fils sont coupés par un organe servant également à les étirer ou lorsque les fils sont projetés par un organe servant à les étirer de façon à former un mat.

Les fils obtenus, éventuellement après d'autres opérations de transformation, peuvent ainsi se présenter sous différentes formes : fils continus ou coupés, tissus, tricots, tresses, rubans ou mats, ces fils étant composés de filaments de diamètre pouvant aller de 5 à 30 micromètres environ.

Le verre fondu qui alimente les filières est obtenu à partir de matières premières pures ou le plus souvent naturelles (c'est-à-dire pouvant contenir des impuretés à l'état de traces), ces matières étant mélangées dans des proportions appropriées, puis étant fondues. La température du verre fondu est réglée de façon traditionnelle de manière à permettre le fibrage et éviter les problèmes de dévitrification. Avant leur rassemblement sous forme de fils, les filaments sont généralement revêtus d'une composition d'ensimage visant à les protéger de l'abrasion et facilitant leur association ultérieure avec les matières à renforcer. La composition d'ensimage peut être une composition aqueuse ou anhydre (contenant moins de 5 % en poids de solvant), par exemple décrite dans WO01/90017 A et FR 2837818 A. Le cas échéant, avant et/ou après la collecte, les fils peuvent subir un traitement thermique dans le but de les sécher et/ou de polymériser l'ensimage.

Les fils de verre obtenus peuvent ainsi être utilisés pour renforcer des matières inorganiques, telles que les matières cimentaires, et des matières organiques, en particulier plastiques.

Les matières inorganiques aptes à être renforcées sont notamment les matières cimentaires telles que le ciment, le béton, le mortier, le gypse, le laitier, les composés formés par réaction de chaux, de silice et d'eau, et les mélanges de ces matières avec d'autres matières, par exemple les mélanges de ciment, de matières polymères et de charges (enduits).

Le renforcement peut se faire directement par incorporation des fils de verre dans la matière cimentaire, ou indirectement à partir de fils de verre préalablement combinés avec une matière organique, par exemple pour former des éléments composites utilisables en tant qu'armature pour le béton armé (« rebars » en anglais).

Les matières organiques aptes à être renforcées par les fils de verre selon l'invention sont des matières plastiques thermoplastiques ou thermodurcissables, de préférence thermodurcissables.

A titre d'exemples de matières thermoplastiques, on peut citer les polyoléfines telles que le polyéthylène, le polypropylène et le polybutylène, les polyesters tels que le polyéthylène téréphtalate et le polybutylène téréphtalate, les polyamides, les polyuréthanes et les mélanges de ces composés.

A titre d'exemples de matières thermodurcissables, on peut citer les polyesters, par exemple les résines vinylester, les résines phénoliques, les résines époxy, les polyacryliques et les mélanges de ces composés. On préfère les résines vinylester, en particulier de type isophtalique, qui résistent mieux à la corrosion.

Comme déjà indiqué précédemment, il est possible d'utiliser les fils de verre sous forme de fils continus (par exemple sous forme de gâteaux ou de stratifils, de grilles, de tissus, ...) ou coupés (par exemple sous forme de non tissés tels que des voiles ou des mats), et leur présentation dépend de la nature de la matière à renforcer et du procédé mis en oeuvre.

Les fils de verre continus selon l'invention peuvent ainsi être utilisés pour la fabrication de corps creux tels que des tuyaux ou des citernes par la technique connue opérant par enroulement filamentaire qui consiste à déposer un renfort, par exemple une nappe de stratifil, imprégné de matière organique sur un mandrin en rotation autour de son axe. De tels corps creux sont notamment destinés à la collecte et à l'évacuation des eaux usées (tuyaux), et au stockage ou au transport de produits chimiques (citernes et conteneurs). Les fils coupés quant à eux conviennent pour le renforcement de peintures ou de mastics, et la réalisation de composites par moulage au contact.

Les enroulements de fils peuvent être utilisés pour réaliser des grilles ou des tissus utilisés en tant qu'éléments anti-fissuration ou anti-sismique dans les matières cimentaires, ou pour la rénovation des ouvrages de génie civil (pont, tunnel, route, ...). Les enroulements peuvent encore être utilisés pour fabriquer des profilés composites par pultrusion, c'est-à-dire par passage d'un renfort imprégné de matière organique au travers d'une filière chauffée. Ces profilés composites sont notamment utilisés comme éléments de construction dans les industries où les matériaux doivent avoir une résistance élevée aux alcalis et aux acides, par exemple les industries chimiques, pétrolières et portuaires.

Les fils de verre sont généralement incorporés dans la matière inorganique ou organique à renforcer en une proportion telle que le verre représente 15 à 80 % en volume du matériau final, de préférence 20 à 60 % en volume.

Dans le composite final, les fils de verre peuvent être les seuls éléments de renforcement de la matière inorganique ou organique, ou ils peuvent être associés à d'autres éléments, tels que des fils métalliques et/ou minéraux, notamment en céramique.

La composition de verre conforme à l'invention permet la réalisation de fils de verre dont la résistance hydrolytique est améliorée par rapport aux fils connus pour le renforcement de matières organiques ou inorganiques, et peut être fibrée dans les installations conventionnelles sans modification des conditions opératoires de manière économique.

En outre, il a été constaté que ces fils de verre présentent de bonnes propriétés diélectriques, notamment une constante diélectrique $\varepsilon'$ inférieure à 8 à 1 MHz et inférieure à 6,5 à 10 GHz, et des pertes diélectriques $\varepsilon''$ inférieures à 0,0500 à 1 MHz et inférieures à 0,1250 à 10 GHz.

Les exemples qui suivent permettent d'illustrer l'invention sans toutefois la limiter.

a) obtention des verres

On prépare des verres par fusion des compositions données dans le tableau 1, exprimées en pourcentage molaire.

Sur ces verres découpés et polis, on mesure la densité, le module d'Young, la constante diélectrique $\varepsilon'$ et les pertes diélectriques $\varepsilon''$ à 1 MHz et 10 GHz (tableau 1).

b) obtention des fils

Des fils de verre de 10 $\mu$m de diamètre sont formés par étirage de filets de verre fondu obtenu sous a) s'écoulant d'une une filière en platine et collectés sous la forme d'une bobine.

Sur le fil de verre, on mesure la résistance hydrolytique dans les conditions suivantes : dans un récipient contenant 9 ml d'eau ultrapure, on introduit 60 mg de fil extrait de la bobine précédente, puis le récipient est fermé hermétiquement et placé dans un bain thermostaté à 80°C pendant 48 heures. On effectue le test sur 5 échantillons du même fil. Parallèlement, on réalise 3 témoins contenant chacun uniquement 9 ml d'eau ultrapure.

On rassemble le contenu des 5 échantillons contenant le fil de verre (solution S1) et des 3 témoins (solution S2) et on mesure la quantité en éléments alcalins dans les solutions par spectroscopie d'émission plasma à couplage induit (ICP) pour Na et K, et par spectroscopie d'émission atomique (AES) pour Li. La teneur en alcalin résultant de la lixiviation du verre (correspondant à la différence des teneurs dans S1 et S2), exprimée en mol/m$^3$, est donnée dans le tableau 1 suivant.

TABLEAU 1

| EXEMPLE | 1 | 2 | 3 | 4 | 5 | 6 | 7 | 8 | 9 |
|---|---|---|---|---|---|---|---|---|---|
| $SiO_2$ | 68,2 | 71,5 | 70,5 | 69,3 | 69,9 | 70,7 | 69,2 | 69,1 | 70,1 |
| $Li_2O$ | 3,9 | 5,2 | 4,4 | 2,0 | 2,9 | 3,9 | 2,0 | 2,2 | 2,2 |
| $Na_2O$ | 7,9 | 6,3 | 5,6 | 9,8 | 9,8 | 7,9 | 8,8 | 8,0 | 8,0 |
| $K_2O$ | 3,9 | 4,2 | 3,7 | 3,9 | 2,9 | 3,9 | 3,9 | 3,5 | 3,5 |
| CaO | 6,8 | 3,5 | 6,5 | 5,7 | 5,2 | 4,3 | 6,9 | 8,0 | 8,0 |
| $ZrO_2$ | 8,9 | 8,9 | 8,9 | 8,9 | 8,9 | 8,9 | 8,9 | 8,9 | 7,9 |
| $R_2O$ | 15,7 | 15,7 | 13,7 | 15,7 | 15,6 | 15,7 | 14,7 | 13,7 | 13,7 |
| $Na_2O + K_2O - CaO$ | 5 | 7 | 2,8 | 8,0 | 7,5 | 7,5 | 5,8 | 3,5 | 3,5 |
| $Li_2O/ R_2O$ | 0,248 | 0,330 | 0,321 | 0,127 | 0,185 | 0,248 | 0,136 | 0,160 | 0,160 |
| $K_2O/ R_2O$ | 0,248 | 0,267 | 0,270 | 0,248 | 0,185 | 0,248 | 0,265 | 0,255 | 0,255 |
| $T_{Log\ \eta=3}$ (°C) | 1251 | 1295 | 1293 | 1292 | 1289 | 1291 | 1286 | 1288 | 1286 |
| $T_{liq}$ (°C) | 1190 | 1200 | 1280 | 1110 | 1150 | 1150 | 1150 | 1240 | n. d. |
| $T_{Log\ \eta=3} - T_{liq}$ (°C) | 61 | 95 | 13 | 182 | 139 | 141 | 136 | 48 | n. d. |
| Propriétés du verre | | | | | | | | | |
| Densité | 2,73 | 2,69 | 2,65 | 2,72 | 2,71 | 2,70 | 2,73 | 2,74 | n. d. |
| Module d'Young (GPa) | 88,6 | 88,5 | n. d. | 86,8 | 88,1 | 87,8 | 87,1 | 88,3 | n. d. |
| $\varepsilon'$ à 1 MHz | n. d. | n. d. | n. d. | 7,84 | n. d. | 7,61 | n. d. | n. d. | n. d. |
| à 10 GHz | n. d. | n. d. | n. d. | 6,34 | n. d. | 6,27 | n. d. | n. d. | n. d. |
| $\varepsilon''$ à 1 MHz | n. d. | n. d. | n. d. | 0,0409 | n. d. | 0,0363 | n. d. | n. d. | n. d. |
| à 10 GHz | n. d. | n. d. | n. d. | 0,1125 | n. d. | 0,0990 | n. d. | n. d. | n. d. |
| Résistance hydrolytique | | | | | | | | | |
| Na (mol/m$^3$) | 0,24 | 0,28 | 0,21 | 0,38 | 0,49 | 0,33 | 0,21 | 0,13 | 0,20 |
| Na+Li+K (mol/m$^3$) | 0,38 | 0,57 | 0,41 | 0,52 | 0,66 | 0,54 | 0,27 | 0,19 | 0,28 |
| n. d. : non déterminé | | | | | | | | | |

TABLEAU 1 (suite)

| EXEMPLE | 10 | 11 | 12 | 13 | 14 | 15 |
|---|---|---|---|---|---|---|
| $SiO_2$ | 68,2 | 68,2 | 68,2 | 68,2 | 68,2 | 62,5 |
| $Li_2O$ | 3,9 | 7,9 | - | - | - | 2,7 |
| $Na_2O$ | 11,8 | 7,9 | 11,8 | 7,9 | 15,7 | 13,4 |
| $K_2O$ | - | - | 3,9 | 7,9 | - | 3,5 |
| CaO | 6,8 | 6,8 | 6,8 | 6,8 | 6,8 | 0,7 |
| $ZrO_2$ | 8,9 | 8,9 | 8,9 | 8,9 | 8,9 | 10,6 |
| $R_2O$ | 15,7 | 15,8 | 15,7 | 15,8 | 15,7 | 16,9 |
| $Na_2O + K_2O - CaO$ | 5,0 | 1,1 | 8,9 | 9,9 | 6,8 | 16,2 |
| $TiO_2$ | - | - | - | - | - | 3,5 |
| $Li_2O/ R_2O$ | 0,248 | 0,500 | - | - | - | 0,159 |
| $K_2O/ R_2O$ | - | - | 0,248 | 0,500 | - | 0,207 |
| $T_{Log\ \eta=3}$ (°C) | 1236 | 1205 | 1297 | 1313 | 1190 | 1241 |
| $T_{liq}$ (°C) | 1230 | 1320 | 1160 | 1350 | 1190 | 1170 |
| $T_{Log\ \eta=3} - T_{liq}$ (°C) | 6 | -115 | 137 | -37 | 99 | 71 |
| Propriétés du verre | | | | | | |
| Densité | 2,73 | 2,73 | 2,74 | 2,72 | 2,72 | 2,83 |
| Module d'Young (GPa) | n. d. | n. d. | n. d. | n. d. | 79,3 | 89,0 |
| $\varepsilon'$ à 1 MHz | n. d. | n. d. | n. d. | n. d. | n. d. | n. d. |

(suite)

| EXEMPLE | 10 | 11 | 12 | 13 | 14 | 15 |
|---|---|---|---|---|---|---|
| à 10 GHz | n. d. | n. d. | n. d. | n. d. | n. d. | n. d. |
| $\varepsilon''$ à 1 MHz | n. d. | n. d. | n. d. | n. d. | n. d. | n. d. |
| à 10 GHz | n. d. | n. d. | n. d. | n. d. | n. d. | n. d. |
| Résistance hydrolytique Na (mol/m$^3$) | n. d. | n. d. | 0,69 | n. d. | 0,90 | 0,79 |
| Na+Li+K (mol/m$^3$) | n. d. | n. d. | 0,75 | n. d. | 0,91 | 0,93 |
| n. d. : non déterminé | | | | | | |

Les exemples 1 à 9 sont conformes à l'invention.

Les exemples 10 à 15 sont comparatifs :

- les verres des exemples 10, 11 et 13 contiennent une forte proportion en $Na_2O$, $K_2O$ et $Li_2O$, respectivement : ces verres ne peuvent pas être fibrés dans les conditions de fibrage habituelles du fait qu'ils présentent une valeur ($T_{Log\, \eta=3}$ - $T_{liq}$) nulle ou négative,
- le verre de l'exemple 12 renferme une proportion élevée en $Na_2O$ : il peut être fibré, notamment parce qu'il contient des teneurs adaptées en $K_2O$ et CaO, mais les fils obtenus ont une faible résistance hydrolytique,
- les exemples 14 et 15 correspondent aux compositions de fils de verre de renforcement du ciment vendus par Saint-Gobain Vétrotex sous la dénomination Cem-FIL® et par NEG sous la dénomination ARG®, respectivement. La résistance hydrolytique de ces fils demeure limitée.

Les fils de verre selon l'invention (exemples 1 à 9) présentent une excellente résistance hydrolytique comparés aux fils de verre à forte teneur en Na20 (exemple 12) et aux fils commerciaux (exemples 14 et 15). On observe en effet que la diffusion des ions $Na^+$ dans le milieu aqueux est réduite par rapport aux fils connus : la réduction est égale à 38 % et 45 % pour les fils les moins résistants (exemple 5 comparé aux exemples 15 et 14, respectivement) et elle est égale à 83 et 85 % pour les plus résistants (exemple 8 comparé aux exemples 15 et 14, respectivement).

c) obtention des composites

Des fils composés de filaments de verre de 17 $\mu$m de diamètre sont obtenus par étirage de filets de verre fondu de composition selon les exemples 1, 4 et 14 et collectés sous la forme d'enroulements. Sur leur trajet, les filaments sont revêtus d'un ensimage aqueux A conventionnel (tel que décrit dans l'exemple comparatif 2 de FR 2 837 818 A) ou d'un ensimage B adapté aux milieux corrosifs (tel que décrit dans l'exemple 1 de FR 2 837 818 A) avant d'être rassemblés en fils contenant 400 filaments. Les enroulements sont séchés à 130°C pendant 12 heures.

Les fils de verre sont utilisés pour former des plaques composites à fils parallèles conformément à la norme ISO 1268-5. La résine renforcée est une résine polyester isophtalique (référence « Synolite 1717 » commercialisée par DSM) à laquelle on ajoute 1,5 part de durcisseur (référence « Trigonox HM » commercialisé par AKZO) pour 100 parts en poids de résine.

Chaque plaque contient 50 % en volume de verre et présente une épaisseur de 3 mm. Les plaques sont ensuite traitées à 80°C pendant 2 heures puis à 120°C pendant 4 heures pour accomplir la réticulation complète de la résine.

Sur les plaques, on détermine :

- le module d'Young selon la norme ISO 14125 et on calcule le module d'Young du fil de verre $M_{fil}$ selon la relation :

$$M_{fil} = [M_{plaque} - (M_{résine} \times FV_{résine})] / FV_{verre}$$

dans laquelle

$M_{plaque}$ est le module d'Young de la plaque composite fil, en MPa
$M_{résine}$ est le module d'Young de la résine, en MPa
$FV_{résine}$ est la fraction volumique de la résine dans la plaque
$FV_{verre}$ est la fraction volumique du verre dans la plaque

EP 2 091 878 B1

- la résistance hydrolytique

On place la plaque dans un bain d'eau bouillante pendant 72 heures et à intervalles réguliers, on la retire du bain, on l'égoutte et on la pèse. La reprise en eau de la plaque composite est égale au quotient du pourcentage d'eau absorbée par cette même plaque pendant un intervalle de temps sur la racine carrée de l'intervalle du temps, exprimé en heure.

- la résistance aux acides

Les plaques sont protégées au niveau des bords par une couche d'une résine epoxy de 1 à 2 mm d'épaisseur, puis chaque plaque est placée sous une contrainte donnée, constante, en flexion trois points dans une solution acide (HCl 1 N ; 25°C). On mesure le temps de rupture du composite dans les conditions de contrainte en flexion (norme ISO 14125) et on trace la courbe de la contrainte à la rupture en flexion en fonction du temps. Sur cette courbe, on détermine la valeur de la contrainte en flexion (« contrainte CSC » - Corrosion Sous Contrainte), en MPa, nécessaire pour obtenir la rupture du composite après 100 heures de vieillissement.

Les mesures de résistance en traction et de module d'Young du fil de verre, ainsi que la résistance hydrolytique et la résistance aux acides du composite sont rassemblés dans le tableau 2 suivant.

TABLEAU 2

| EXEMPLE | 16 | 17 | 18 | 19 | 20 | 21 | 22 |
|---|---|---|---|---|---|---|---|
| Fil | | | | | | | |
| Verre | Ex. 1 | Ex. 4 | Ex. 14 | Verre E | Ex. 1 | Ex. 4 | Ex. 14 |
| Ensimage | A | A | A | A | B | B | B |
| Résistance en traction (N/tex) | 0,38 | 0,38 | 0,29 | 0,45 | 0,50 | 0,45 | 0,47 |
| Module d'Young (MPa) | 72500 | 75000 | 71500 | 73000 | 76000 | 76000 | 71500 |
| Plaque composite | | | | | | | |
| Reprise en eau (%/√temps en h) | n. d. | n. d. | n. d. | 0,03 | 0,10 | n. d. | 0,16 |
| Contrainte CSC (MPa) | 950 | 1000 | n. d. | 200 | 1050 | n. d. | 850 |
| n. d. : non déterminé | | | | | | | |

Les fils selon l'invention (exemples 16 et 17) revêtus de l'ensimage A présentent une résistance en traction plus élevée que les fils commerciaux (exemple 18) mais qui demeure inférieure à celle des fils en verre E (exemple 19). Le module d'Young de ces fils est supérieur aux fils des exemples 18 et 19. La plaque composite renfermant ces fils présente en outre une meilleure résistance aux milieux acides que celle contenant des fils de verre E (exemple 19).

Les mêmes fils revêtus de l'ensimage B (exemples 20 et 21) présentent une résistance en traction équivalente et un module d'Young supérieur à ceux des fils connus (exemple 22).

Les plaques composites qui contiennent les fils selon l'invention résistent mieux aux milieux aqueux et acides : la reprise en eau est réduite et la contrainte CSC est améliorée comparées à celles qui sont obtenues avec les fils de l'exemple 22.

**Revendications**

**1.**  Composition de verre résistant aux milieux chimiques pour la réalisation de fils de renforcement, ladite composition comprenant les constituants suivants dans les limites définies ci-après, exprimés en pourcentages molaires :

| | |
|---|---|
| $SiO_2$ | 67 - 72 % |
| $ZrO_2$ | 5 - 9,5 % |
| $R_2O$ (R = Na, K et Li) | 11 - 17 %, le taux de $R_2O$ étant la somme des taux en $Na_2O$, $K_2O$ et $Li_2O$ |
| $Li_2O$ | 0 - 5,5 % |
| $K_2O$ | 2,5 - 5,5 % |

ladite composition étant **caractérisée par** les pourcentages molaires suivants :

$Na_2O$          < 10 %

(suite)

CaO             3-9 %

la composition contenant en outre moins de 1 % d'impuretés choisies dans le groupe constitué par : $Al_2O_3$, $Fe_2O_3$, $Cr_2O_3$, $TiO_2$, MgO, SrO, BaO et $P_2O_5$,
la composition étant exempte de F, et satisfaisant la relation suivante :

$$2,5 \% \leq Na_2O + K_2O - CaO \leq 9,5 \%.$$

2. Composition selon la revendication 1 **caractérisée en ce qu'**elle présente une différence entre la température de formage des fils ($T_{Log\ \eta=3}$) et la température au liquidus ($T_{liq}$) au moins égale à +10°C.

3. Composition selon l'une des revendications 1 ou 2, la composition présentant les pourcentages molaires suivants :

$Na_2O$             5 - < 10 %

la composition étant exempte de $TiO_2$, MgO, SrO et BaO.

4. Composition selon la revendication 3, la composition présentant le pourcentage molaire suivant:

$Li_2O$             1,5 - 5,5 %

5. Composition selon l'une des revendications 1 à 4, **caractérisée en ce que** le taux de CaO varie de 3 à 8,5 %.

6. Composition selon l'une des revendications 1 à 5, **caractérisée en ce que** les rapports molaires $Li_2O/R_2O$ et $K_2O/R_2O$ sont inférieurs ou égaux à 0,5.

7. Composition selon la revendication 6, **caractérisée en ce que** le rapport molaire $Li_2O/R_2O$ est inférieur ou égal à 0,35 et le rapport molaire $K_2O/R_2O$ est inférieur ou égal à 0,30.

8. Fil de verre destiné au renforcement de matières inorganiques ou organiques, **caractérisé en ce qu'**il est obtenu à partir d'une composition de verre selon l'une des revendications 1 à 7.

9. Composite de fils de verre et de matière inorganique ou organique, **caractérisé en ce qu'**il comprend des fils de verres selon la revendication 8.

10. Composite selon la revendication 9, **caractérisé en ce que** la matière inorganique est choisie parmi les matières cimentaires telles que le ciment, le béton, le mortier, le gypse, le laitier et les composés formés par réaction de chaux, de silice et d'eau.

11. Composite selon la revendication 9, **caractérisé en ce que** la matière organique est choisie parmi les matières thermoplastiques telles que les polyoléfines, les polyesters, les polyamides, les polyuréthanes et les mélanges de ces composés.

12. Composite selon la revendication 9, **caractérisé en ce que** la matière organique est choisie parmi les matières thermodurcissables telles que les polyesters, les résines phénoliques, les résines epoxy, les polyacryliques et les mélanges de ces composés.

13. Utilisation des fils de verre selon la revendication 8 pour le renforcement de matières inorganiques ou organiques.

**Patentansprüche**

1. Gegenüber chemischen Medien resistente Glaszusammensetzung zur Herstellung von Verstärkungsfasern, wobei die Zusammensetzung die folgenden Bestandteile in den nachfolgend definierten Grenzen, ausgedrückt in Molpro-

zent, umfasst:

| | |
|---|---|
| $SiO_2$ | 67 - 72 % |
| $ZrO_2$ | 5 - 9,5 %, |
| $R_2O$ (R = Na, K und Li) | 11 - 17 %, wobei der Anteil an $R_2O$ der Summe der Anteile an $Na_2O$, $K_2O$ und $Li_2O$ entspricht, |
| $Li_2O$ | 0 - 5,5 % |
| $K_2O$ | 0 - 5,5 % |

wobei die Zusammensetzung durch die folgenden Molprozentsätze gekennzeichnet ist:

| | |
|---|---|
| $Na_2O$ | < 10 % |
| CaO | 3-9% |

wobei die Zusammensetzung ferner weniger als 1 °% Verunreinigungen enthält, ausgewählt aus der Gruppe bestehend aus: $Al_2O_3$, $Fe_2O_3$, $Cr_2O_3$, $TiO_2$, MgO, SrO, BaO und $P_2O_5$,
wobei die Zusammensetzung frei von F ist und die folgende Relation erfüllt:

$$2,5\ \% \leq Na_2O + K_2O - CaO \leq 9,5\ \%.$$

2. Zusammensetzung nach Anspruch 1, **dadurch gekennzeichnet, dass** sie eine Differenz zwischen der Faserbildungstemperatur ($T_{Log\ \eta=3}$) und der Liquidustemperatur ($T_{liq}$) von mindestens gleich +10 °C aufweist.

3. Zusammensetzung nach einem der Ansprüche 1 oder 2, wobei die Zusammensetzung die folgenden Molprozentsätze aufweist:

| | |
|---|---|
| $Na_2O$ | 5 - < 10 % |

wobei die Zusammensetzung frei von $TiO_2$, MgO, SrO und BaO ist.

4. Zusammensetzung nach Anspruch 3, wobei die Zusammensetzung den folgenden Molprozentsatz aufweist:

| | |
|---|---|
| $Li_2O$ | 1,5 - 5,5 % |

5. Zusammensetzung nach einem der Ansprüche 1 bis 4, **dadurch gekennzeichnet, dass** der Anteil an CaO von 3 bis 8,5 % variiert.

6. Zusammensetzung nach einem der Ansprüche 1 bis 5, **dadurch gekennzeichnet, dass** die Molverhältnisse $Li_2O/R_2O$ und $K_2O/R_2O$ kleiner oder gleich 0,5 sind.

7. Zusammensetzung nach Anspruch 6, **dadurch gekennzeichnet, dass** das Molverhältnis $Li_2O/R_2O$ kleiner oder gleich 0,35 ist und dass das Molverhältnis $K_2O/R_2O$ kleiner oder gleich 0,30 ist.

8. Glasfaser, die zur Verstärkung von anorganischen oder organischen Materialien bestimmt ist, **dadurch gekennzeichnet, dass** sie ausgehend von einer Glaszusammensetzung nach einem der Ansprüche 1 bis 7 erhalten wird.

9. Verbundwerkstoff aus Glasfasern und einem anorganischen oder organischen Material, der **dadurch gekennzeichnet ist, dass** er Glasfasern nach Anspruch 8 umfasst.

10. Verbundwerkstoff nach Anspruch 9, **dadurch gekennzeichnet, dass** das anorganische Material ausgewählt ist aus Zementmaterialien, wie beispielsweise Zement, Beton, Mörtel, Gips, Schlacke und den Verbindungen, die durch Umsetzung von Kalk, Siliciumdioxid und Wasser gebildet werden.

**11.** Verbundwerkstoff nach Anspruch 9, **dadurch gekennzeichnet, dass** das organische Material ausgewählt ist aus thermoplastischen Materialien, wie beispielsweise Polyolefinen, Polyestern, Polyamiden, Polyurethanen und Gemischen dieser Verbindungen.

**12.** Verbundwerkstoff nach Anspruch 9, **dadurch gekennzeichnet, dass** das organische Material ausgewählt ist aus warm aushärtenden Materialien, wie beispielsweise Polyestern, Phenolharzen, Epoxidharzen, Polyacrylen und Gemischen dieser Verbindungen.

**13.** Verwendung der Glasfasern nach Anspruch 8 zur Verstärkung von anorganischen oder organischen Materialien.

**Claims**

**1.** A chemically resistant glass composition for the manufacture of reinforcing strands, said composition comprising the following constituents in the limits defined hereafter, expressed as molar percentages :

| | |
|---|---|
| $SiO_2$ | 67 - 72 % |
| $ZrO_2$ | 5 - 9.5 % |
| $R_2O$ (R = Na, K and Li) | 11 - 17 %, the amount of $R_2O$ being the sum of the amounts of $Na_2O$, $K_2O$ and $Li_2O$ |
| $Li_2O$ | 0-5.5 % |
| $K_2O$ | 2.5 - 5.5 % |

said composition being **characterized by** the following molar percentages :

| | |
|---|---|
| $Na_2O$ | < 10 % |
| CaO | 3-9 % |

the composition further comprising less than 1% impurities selected from the group consisting of : $Al_2O_3$, $Fe_2O_3$, $Cr_2O_3$, $TiO_2$, MgO, SrO, BaO and $P_2O_5$,
the composition being free from F, and satisfying the following relation :

$$2.5 \% \leq Na_2O + K_2O - CaO \leq 9.5 \%.$$

**2.** The composition according to claim 1, **characterized in that** the difference between the strand forming temperature ($T_{Log\,\eta=3}$) and the liquidus temperature ($T_{liq}$) is at least equal to +10°C.

**3.** The composition according to claim 1 or claim 2, which has the following molar percentages:

| | |
|---|---|
| $Na_2O$ | 5 - < 10 % |

the composition being free from $TiO_2$, MgO, SrO and BaO.

**4.** The composition according to claim 3, which has the following molar percentage:

| | |
|---|---|
| $Li_2O$ | 1.5-5.5 % |

**5.** The composition according to one of claims 1 to 4, **characterized in that** the amount of CaO varies from 3 to 8.5 %.

**6.** The composition according to one of claims 1 to 5, **characterized in that** the molar ratios $Li_2O/R_2O$ and $K_2O/R_2O$ are less than or equal to 0.5.

**7.** The composition according to claim 6, **characterized in that** the molar ratio $Li_2O/R_2O$ is less than or equal to 0.35 and the molar ratio $K_2O/R_2O$ is less than or equal to 0.30.

8.  A glass strand intended for reinforcing inorganic or organic materials, **characterized in that** it is obtained from a glass composition according to one of claims 1 to 7.

9.  A composite of glass strands and an inorganic or organic material, **characterized in that** it comprises glass strands according to claim 8.

10. The composite according to claim 9, **characterized in that** the inorganic material is chosen from cementitious materials such as cement, concrete, mortar, gypsum, slag and compounds formed by the reaction of lime, silica and water.

11. The composite according to claim 9, **characterized in that** the organic material is chosen from thermoplastics such as polyolefins, polyesters, polyamides, polyurethanes and mixtures thereof.

12. The composite according to claim 9, **characterized in that** the organic material is chosen from thermosetting materials such as polyesters, phenolic resins, epoxy resins, polyacrylics and mixtures thereof.

13. Use of the glass strands according to claim 8 for reinforcing inorganic or organic materials.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0500325 A1
- JP 9156957 B
- US 5064785 B
- JP 2000186787 A
- FR 2651223
- US 3861926 A
- DE 2656002
- WO 2004035497 A1
- US 6627569 B
- US 6630420 B
- CN 1046147 A
- CN 1149031 A
- US 4014705 B
- WO 2006090030 A1
- WO 0190017 A
- FR 2837818 A